# EUROPEAN PATENT SPECIFICATION

(11) **EP 0 396 120 B1**
(45) Date of publication and mention of the grant of the patent: **04.10.1995**
(21) Application number: 90108329.5
(22) Date of filing: 02.05.1990
(51) Int. Cl.: H04B 3/46, H04B 3/60

(54) **Procedure and apparatus for the protection of a data transmission network**
Verfahren und Einrichtung zum Schutz eines Datenübertragungsnetzes
Procédé et dispositif de protection d'un réseau de transmission de données

(30) Priority: 02.05.1989 FI 892097
(43) Date of publication of application: 07.11.1990
(73) Proprietor: KONE Elevator GmbH, 6340 Baar (CH)
(72) Inventor: Juntunen, Asko, SF-05860 Hyvinkää (FI); Leppänen, Heikki, SF-05840 Hyvinkää (FI); Selin, Kimmo, SF-05460 Hyvinkää (FI)
(74) Representative: Zipse + Habersack

(56) References cited:
- EP-A- 0 150 457
- DE-A- 2 128 119
- GB-A- 2 077 076
- US-A- 4 853 950
- UKW-BERICHTE 2/85, pages 108-112, Erich Stadler: Messen des Wellenwiderstandes von Kabeln mit Impulsen und Sinuswellen.
- HEWLETT PACKARD Catalogue 1973: pages 145, 171.

## Description

The present invention relates to a procedure and an apparatus for the protection of a data transmission network consisting of a signal bus provided with terminal impedances and of signal devices connected to the bus.

A data transmission network implemented using pulse transformers and balanced with terminal resistors is liable to connection errors. A single faulty connection may paralyze the whole bus. Moreover, since the devices using the bus are connected to it in parallel, a wrong voltage fed into the bus at any point may destroy all the devices connected to it. This involves maintenance problems and increases the costs. Further difficulties are encountered if the state of the bus cannot be known before a data transfer operation is attempted.

DE-A-2 128 119 discloses a method for checking fault voltages on a telephone communication bus. By this method it is possible to localize isolation faults of the telephone cable. However this method is not adapted to protect hardware components which are connected with the bus in operation in case of an actual fault situation.

Erich Stadler discloses in his article "Messen des Wellenwiderstandes von Kabeln mit Impulsen und Sinuswellen" in UKW-Berichte 2/85, pages 108-112, a method for determining the impedance of a bus cable by means of pulses and sinus waves. However even this method gives no hint in which way components connected to a bus having an impedance faults could be protected against this fault in operation conditions.

The object of the present invention is to provide an apparatus and a method for the protection of a data transmission network eliminating the drawbacks referred to. The method of the invention is characterized by the features of claim 1. The apparatus of the invention is characterized by the features of claim 3. Advantageous embodiments of the invention are subject matter of the corresponding subclaims.

The preferred embodiments of the invention are as defined in the other claims.

A protection unit as provided by the invention is only needed at one point in the network. This means that the costs involved are low. Moreover, the protection unit of the invention facilitates installation and maintenance.

In the following, the invention is described in detail with the aid of an example by referring to the drawings attached, in which:

Fig. 1 illustrates the connection error situations occurring in an elevator shaft.

Fig. 2 shows a block diagram illustrating the detection and indication of error states and the protection arrangements.

Fig. 3 presents the mains voltage monitoring circuit.

Fig. 4 presents the supply voltage and ground potential monitoring circuit.

Fig. 5 presents the power switch control logic.

Fig. 6 presents the power switch.

Fig. 7 presents the AND logic.

Fig. 8 presents the overvoltage protector circuit.

Fig. 9 presents the circuit controlling the mains voltage signal.

Fig. 10 presents the reset logic.

Fig. 11 presents the logic used for testing the line impedance.

Fig. 12a - 12l show the pulse patterns occurring in the line impedance testing logic.

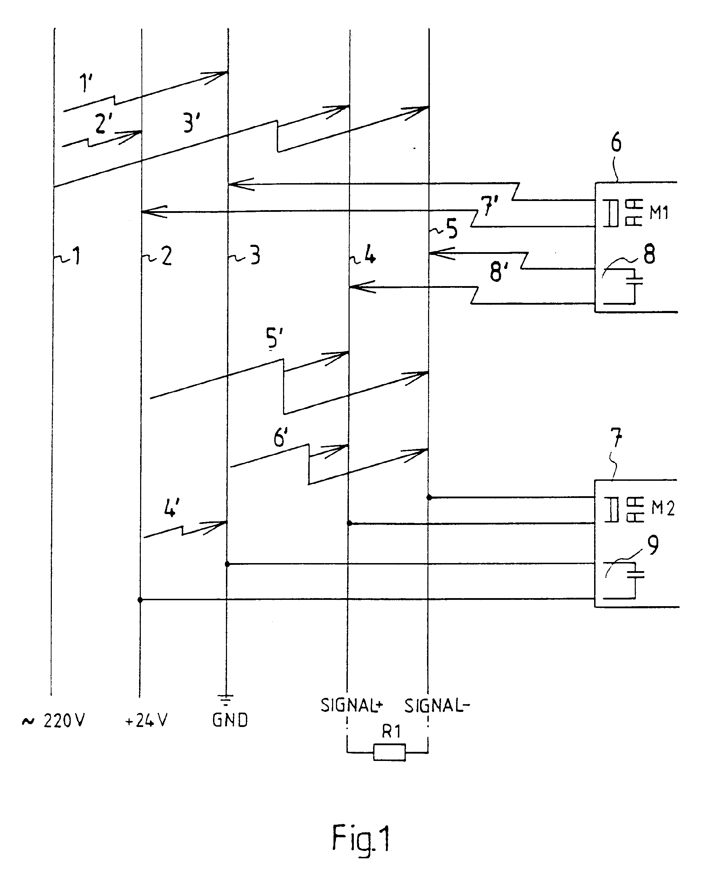

As illustrated by fig. 1, the following faulty connections (represented by arrows) may occur in a data transmission network installed in an elevator shaft, implemented using pulse transformers and balanced with terminal resistors:
1′. Direct connection between mains voltage, e.g. 220 V, in the safety circuit conductor 1 and signal ground (GND), which is the neutral phase in conductor 3. In this situation, the fuse will be blown, but no actual damage results.
2′. Direct connection between mains voltage in the safety circuit conductor 1 and the positive supply voltage, e.g. 24 V, in conductor 2 feeding the devices 6 and 7 connected to the bus. In this case the supply voltage will exceed the permitted value either in the positive or the negative direction, sooner or later destroying all devices connected to the bus.
3′. Direct connection between mains voltage in the safety circuit conductor 1 and one of the signal phases in conductor 4 (SIGNAL+) or 5 (SIGNAL-). This will paralyze the bus and cause danger to installers. No direct damage will result. If one of the signal phases is connected to signal ground, which is identical with the neutral phase, this will result in the destruction of all pulse transformers M1 and M2 in the devices connected to the bus. The conductors are connected by a terminal resistor R1.
4′. Direct connection between supply voltage and signal ground, i.e. a short-circuit condition. As a result, the fuse will be blown and the power supply unit may be destroyed or the coductors may melt.
5′. Supply voltage connected to one or both of the signal conductors 4 and 5. This will prevent data transfer, and if one of the bus conductors is connected to signal ground, the pulse transformers M1 and M2 of all devices connected to the bus will be burnt.
6′. Signal ground connected to the bus, preventing data transfer. As in the previous case, if the supply voltage is connected to one of the signal conductors, the pulse transformers M1 and M2 of all devices connected to the bus will be destroyed.
7′. Pulse transformer M1 of signal device 6 connected between supply voltage (in conductor 2) and signal ground (conductor 3). Since the pulse transformer has a low resistance, it practically constitutes a short circuit and will be destroyed due to overheating.
8′. Voltage input 8 or 9 (GND, supply voltage) of signal device 6 or 7 connected to the signal bus. This prevents data transfer but causes no destruction.

To cope with the error situations described above, continuous monitoring, detection and indication of the bus state are necessary. In addition, when connection errors or inappropriate voltages occur, sufficiently quick counteraction is needed to prevent the destructive effects.

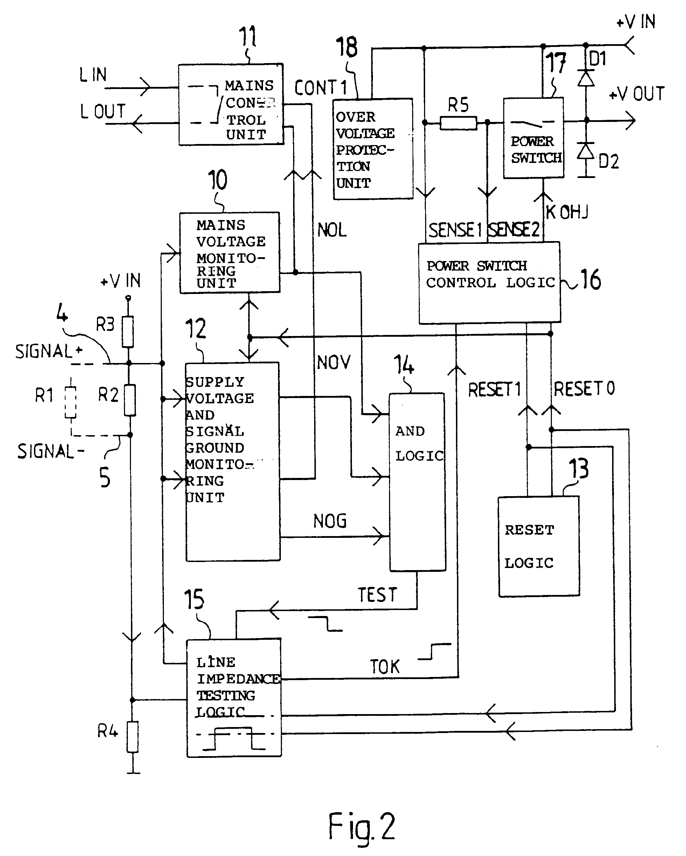

The basis of the solution is that one line 4 (fig. 2) of the signal bus with terminal resistors R1 and R2 is connected via a resistor R3 to the positive supply voltage +VIN, e.g. +24 V, while the other line 5 is connected via another resistor R4 of equal resistance to signal ground. When data is being transmitted through the bus, short pulses, both positive and negative, of the order of a few tens of volts occur in it. The bus is monitored via a time constant circuit, the bus voltage appearing as half the supply voltage. Information regarding the presence or absence of incorrect voltages in the bus is obtained by observing the average bus voltage.

Moreover, faulty connections likely to cause malfunctions can be detected by measuring the line impedance.

The block diagram in fig. 2 illustrates the principle of detection and indication of error states as well as the protective actions.

The mains voltage monitoring unit 10 monitors the signal bus for the appearance of the mains voltage. If a mains-level voltage is detected, the monitoring unit 10 sends the mains control unit 11, which is fed by the mains voltage LIN, an instruction via the NOL signal to immediately switch off the mains supply LOUT to the elevator shaft. The mere presence of the mains voltage in the signal bus will paralyze the bus, without causing immediate damage. However, if the mains voltage appears in the bus, it is possible that an installer is accidentally connecting the other signal line to the neutral or signal ground conductor. If these two conditions should occur simultaneously, the result would be the destruction of the pulse transformers of all signal devices connected to the bus. For this reason, the mains voltage must be switched off immediately. Furthermore, the presence of the mains voltage in the bus also requires that the supply voltage to the signal devices is also switched off. The protection circuit indicates the presence of the error situation by turning on an LED, which will only be turned off after the error has been corrected and the voltage supply has been off for a given length of time.

The supply voltage and signal ground monitoring unit 12 monitors the signal bus for the presence of the supply voltage and/or signal ground potential. If the supply voltage is detected in the bus, it will be switched off immediately and an indicator light is illumined to indicate the state. This condition is not removed until the fault has been eliminated and the power supply has been off for some time. The supply voltage has to be switched off immediately because it is possible that the installer is just about to connect the other signal conductor to signal ground, in which case the pulse transformers of all devices connected to the bus would be destroyed. The supply voltage in itself will block the bus although no damage results.

If the signal ground potential is detected in the bus, the supply voltage and the mains supply are immediately switched off because in this case it is again possible that the installer is about to connect one of these voltages to the other bus conductor, which in turn would result in the destruction of all devices connected to the bus. The presence of this condition is indicated by an illumined LED, which is turned off when the fault is removed.

The mains voltage monitoring unit 10 and the supply voltage and signal ground monitoring unit 12 are in continuous operation and react immediately upon detecting an incorrect voltage in the bus.

After the voltages have been connected to the devices, the reset logic 13 performs an initial resetting (signals RESET0, RESET1) of the system and the AND logic checks the states of the mains voltage monitoring unit 10 and the signal ground monitoring unit 12 (signals NOL, NOF and NOG), and if no incorrect voltages are present, the line impedance testing logic 15 is allowed (signal TEST) to carry out an impedance test on the signal bus. The line impedance test is implemented by sending a short pulse into the bus and observing the changes occurring in the pulse during its passage through the bus, each end of which is provided with a terminal resistor R1, R2. The pulse transformer connecting each signal device to the bus is practically a short circuit for direct current, whereas for a short pulse it constitutes a relatively high impedance. Therefore, if the return pulse remains within certain preset limits, i.e. if the bus impedance remains within limits permitting (signal TOK) normal operation, then the power switch control logic 16 is allowed to turn on (signal KOHJ) the power switch 17.

If after a power break the signals provided by the mains voltage monitoring unit 10 and the supply voltage and signal ground monitoring unit 12 indicate the presence of a fault, no impedance testing is performed and the power switch 17 is not allowed to turn on the supply voltage.

The line impedance test is only carried out after the voltage has been switched on.

After a power break, the reset logic 13 performs initial resetting of the whole testing and protection logic.

The overvoltage protector unit 18 monitors the voltage states of both the power supply unit and the bus supply. If for example the voltage +VIN supplied by the power supply unit rises too much e.g. due to damage in the unit or a connection error, the overvoltage protector will short-circuit the supply voltage to ground, in which case the supply voltage fuse will blow out but the signal devices will remain undamaged.

In the case of connection error 2′ in fig. 1, when the mains voltage is connected to the +VOUT terminal, the voltage at this point will start rising and, through diode D1, the increase is perceived by the overvoltage protection unit 18, which will short-circuit the line to signal ground. In this case, both the supply voltage fuse and the mains voltage fuse will blow out, but the signal devices will remain intact. If the mains voltage is connected during the negative half-cycle, the current will flow through diode D2 and blow the fuse, but the devices will not be damaged.

After the initial resetting, the power switch control logic 16 awaits permission (signal TOK) from the line impedance testing logic 15 to turn on the power switch 17. When the permission is received, the switch 17 is at first turned on for an instant to produce a short current pulse allowing the capacitances in the signal devices to be charged to a value sufficiently close to the final value. Towards the end of the pulse, a current consumption test is performed by checking the voltage across the current sensing resistor R5. If the current has a value below the permitted maximum value, the power switch 17 is given a continuous control voltage and an indicator light is lit to show that the supply voltage to the signal devices has been switched on. The current is monitored continuously, and if the current value remains above the permitted maximum for a certain time, the control signal to the power switch 17 is removed and an indicator light is lit to indicate the presence of an overload condition.

After a certain time delay, a new attempt is made to turn on the power switch. The switching unit is so rated that even if the output is directly and continuously short-circuited to signal ground, the unit will not be destroyed.

The power switch control logic also comprises a so-called dynamic current limit. This means that if the current consumption in a normal situation changes too much and too fast, then it is most probable that a short-circuit, e.g. due to connection error 7′, has occurred at the end of a long line. In this case, the pulse transformer is directly connected between the supply voltage and signal ground.

This situation may arise when a signal device is being connected to the data transmission network while the bus supply voltage is on.

The dynamic current limit is set to a sufficiently high value to permit normal connection of a signal device while the voltages are on without the dynamic current limit being exceeded.

The destructive effects of the various connection errors illustrated by fig. 1 can be eliminated as follows:
1′. The fuse is blown, no damage to the electronics.
2′. The overvoltage protector 18 is activated, causing the fuses to blow out while the electronics remain undamaged.
3′. The mains voltage monitoring unit 10 detects the presence of the mains voltage and instructs the control unit 11 to switch off the mains supply before any damage results. The supply voltage is also switched off as the power switch 17 is turned off. Though nothing is damaged, the presence of the mains voltage prevents data traffic in the signal line. The danger is that if the other signal line is connected to signal ground, then all the devices connected to the bus will be damaged.
4′. When the supply voltage is connected to signal ground, the result is that, upon detecting an overload, the power switch control logic 16 turns off the power switch 17, thereby preventing damage to the electronics.
5′. Connecting the supply voltage to the signal line activates the supply voltage and signal ground monitoring unit 12, whereupon the control signal to the power switch 17 is quickly removed. The appearance of the supply voltage in the signal line will not cause any damage in itself, but it is possible that the other signal conductor is connected to signal ground, in which case all the devices connected to the bus would be destroyed.
6′. The presence of the signal ground potential in the signal bus prevents data transfer but causes no damage in itself. However, it is possible that either the mains voltage or the supply voltage is simultaneously connected to the other signal conductor. For this reason, both the supply and the mains voltages are quickly switched off.
7′. The bus connections of a signal device may be accidentally connected to the power supply lines. Since the pulse transformer practically constitutes a direct short circuit for d.c., it would be destroyed. The power switch control logic 16 detects the fault and quickly turns off the power switch 17, thus preventing the destruction of the pulse transformer.
8′. The voltage feed terminals of a signal device may be accidentally connected to the signal bus. This prevents data transfer, and the supply voltage and signal ground monitoring unit 12 perceives the faulty connection as a change in the impedance and indicates that signal ground is connected to the signal line, whereupon the supply and mains voltages are quickly switched off.

In the following, the units shown in fig. 2 will be described in detail.

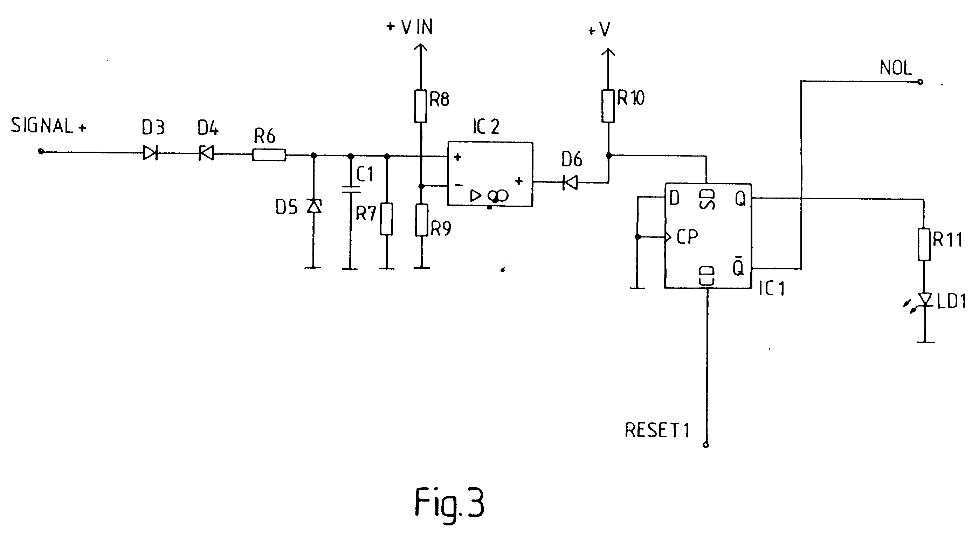

The mains voltage monitoring unit 10 shown in fig. 3 monitors the bus voltage and, upon detecting the presence of the mains voltage, indicates this by illumining an indicator light and sends the information further via the NOL signal.

After a power break, the RESET1 signal rises momentarily to the positive voltage +V, e.g. +15 V, thereby resetting flip-flop IC1, which then causes the NOL output to go high, e.g. to the level of the voltage +V, while the indicator light LD1 is off.

When the mains voltage appears in the bus, capacitor C1 is quickly charged via diode D3, Zener diode D4 and resistor R6 to the positive voltage +V, to which the capacitor voltage is limited by Zener diode D5. When the voltage across C1 rises above the level of the voltage division determined by resistors R8 and R9, the output of comparator IC2 goes high. This stops the flow of the current from the positive voltage +V through resistor R10 and diode D6. As a result, the SD input of flip-flop IC1 goes high, causing the flip-flop to be set. Consequently, the NOL output falls to 0 V and a voltage is applied across resistor R11, setting up a current through indicator LD1, which is thus illumined. Simultaneously, the NOL signal causes both the mains and the supply voltages to be switched off.

Even if the mains voltage disappears from the bus, the NOL signal will not return to the positive voltage until the voltage is switched off and then on again, whereupon flip-flop IC1 is reset by the RESET1 signal.

Zener diode D4 constitutes a threshold above which the SIGNAL+ voltage must rise before capacitor C1 can be charged. After the mains voltage has disappeared, the capacitor is slowly discharged via resistor R7. Zener diode D5 limits the maximum voltage of comparator IC2 to a level ensuring that the comparator will not be destroyed.

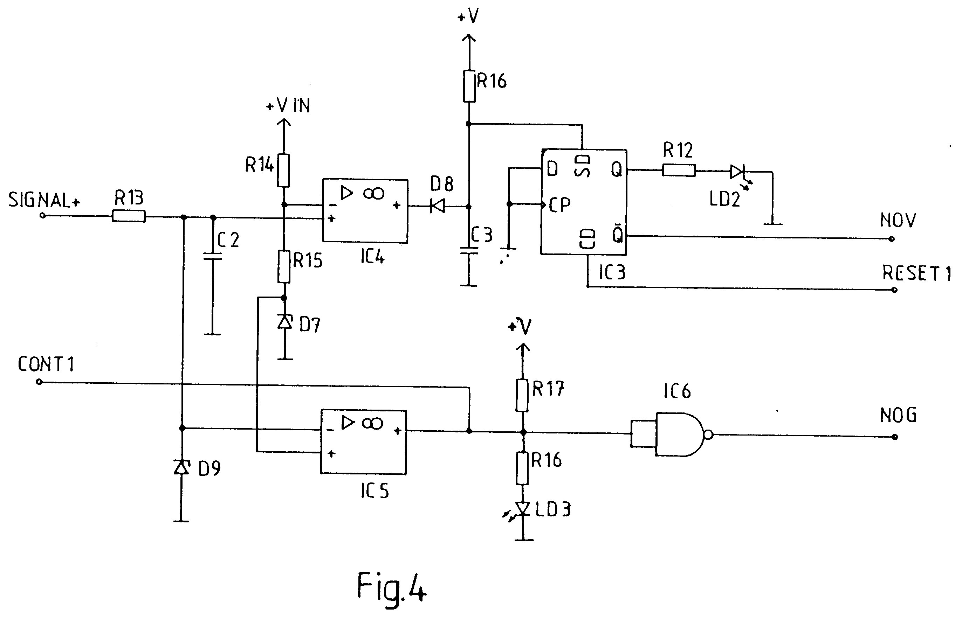

The supply voltage and signal ground monitoring unit shown in fig. 4 monitors the signal bus and gives an alarm if either the supply voltage or the signal ground potential is detected in the bus. In fig. 4, the upper section of the circuit monitors the bus for the presence of the supply voltage while the lower section takes care of signal ground monitoring.

After a power break, the reset logic 13 resets flip-flop IC3 via the RESET1 signal. The NOV signal at one output of the flip-flop now rises to the level of the positive voltage +V while the voltage at the other output falls to 0 V. In this situation, no current flows through resistor R12 to indicator LD2, which therefore remains unlit.

In a normal situation, the positive signal line 4 (SIGNAL+) is at a positive voltage, e.g. about +12 V. Because of the filtering circuit consisting of resistor R13 and capacitor C2, this voltage is seen at the positive input + of comparator IC4 as a d.c. voltage level. The reference voltage, e.g. +17 V, applied to the negative input - of the comparator is obtained via voltage division by means of resistors R14 and R15 and diode D7. When the supply voltage appears in the bus, the signal voltage in the SIGNAL+ line rises accordingly and capacitor C2 is charged via resistor R13 to the same voltage. As soon as the voltage across capacitor C2 reaches the level of the reference voltage, the output of comparator IC4 goes high, so that the current through resistor R16 can no longer flow through diode D8. Consequently, the voltage at the SD terminal of flip-flop IC3 rises to the level of the positive voltage +V and the flip-flop is set. This means that output Q of the flip-flop rises to the positive voltage +V, thus setting up a current through indicator LD2, which is now lit. Simultaneously, the other flip-flop output NOV falls from the positive voltage +V to 0 V, with the result that the power switch 17 is subsequently turned off, thereby switching off the supply voltage to the signal devices.

Indicator light LD2 will not be extinguished nor will the NOV signal go high until SIGNAL+ has returned to its normal value and the power supply to the system has been off for some time, whereupon the RESET1 signal rises to the positive voltage +V for an instant, causing flip-flop IC3 to be reset. The indicator light then goes out and the NOV signal rises to the positive voltage +V.

In the signal ground monitoring section, comparator IC5 sees the SIGNAL+ signal as a positive voltage, e.g. +12 V, at its negative input. Since the positive input of comparator IC5 is fed by a lower voltage, e.g. 5.6 V, the comparator output is 0 V. Therefore, no current flows through resistor R16 and indicator light LD3 is unlit. Thus the output NOG of NAND circuit IC6 is at the positive voltage +V.

When signal ground is connected to the bus, SIGNAL+ falls to 0 V and the output of comparator IC5 rises to the positive voltage +V as the output and the positive voltage +V are connected via resistor R17. As a result, indicator light LD3 is lit and the output signal NOG falls to 0 V. Due to this change, the power switch 17 is turned off and the supply of power to the signal devices interrupted.

When the CONT1 signal rises to the positive voltage +V, the result is that the mains voltage control unit 11 switches off the mains voltage supply to the elevator shaft. As soon as the signal ground potential is removed from the bus, SIGNAL+ rises back to a positive voltage, e.g. +12V, indicator light LD3 is extinguished, the CONT1 signal falls to 0 V and the NOG signal rises to the positive voltage +V. Zener diode D9 protects the signal inputs of amplifiers IC4 and IC5.

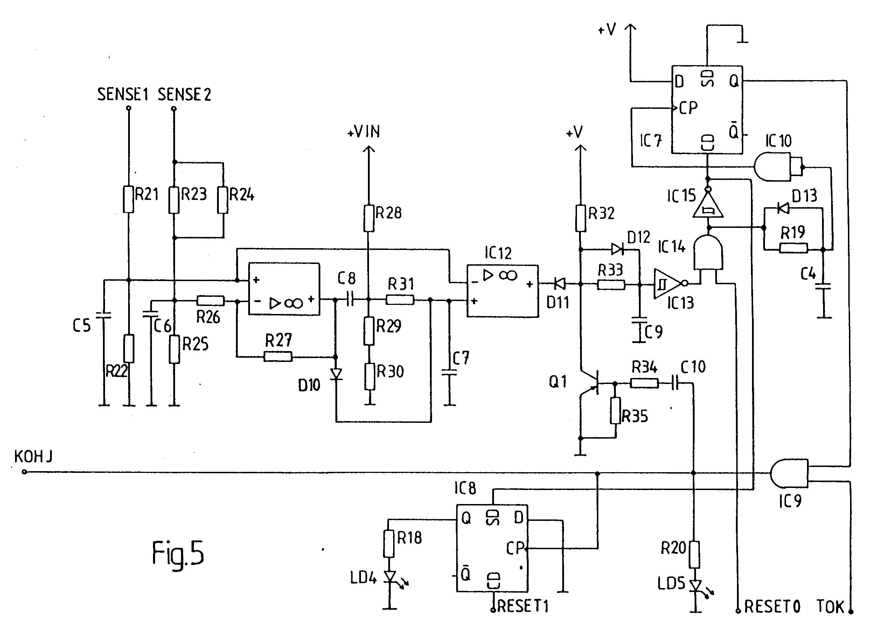

In the power switch control logic shown in fig. 5, the +V pulse RESET1 and the 0-V pulse RESET0 output by the reset logic 13 in fig. 2 after the voltage has been switched on cause flip-flop IC7 to be reset and flip-flop IC8 to be set. The flip-flop outputs Q being thus zeroed, the overload indicator LD4 connected to output Q of flip-flop IC8 via resistor R18 is unlit. The output of AND gate IC9 is 0 V because output Q of flip-flop IC7 has been reset.

If no faults have been detected in the initial tests, the TOK signal will rise to the +V voltage. Capacitor C4 starts charging via resistor R19 towards the level of +V, and when the capacitor voltage reaches the threshold of the AND circuit IC10 connected after it, the output of IC10 will go high. Therefore, the voltage +V at the D input of flip-flop IC7 is passed to its Q output. The KOHJ signal now rises to the +V voltage, thus turning on the power switch 17 (fig. 2).

Indicator LD5, which is connected via resistor R20 to the output of AND gate IC9, indicates the state of the power switch control signal.

Signals SENSE1 and SENSE2 observe the voltage across, i.e current through, the current sensing resistor R5. SENSE1 is connected to amplifier IC11 via resistors R21 and R22 and capacitor C5, and SENSE2 via resistors R23 - R26 and capacitor C6.

When this current increases beyond the allowed limit, the voltage at the +-input of amplifier IC11 becomes more positive than the voltage at the --input, so that the amplifier output will rise and start charging capacitor C7 via diode D10, which, in addition to the output, is also connected to the --input of amplifier IC11. The result of this is that the +-input of amplifier IC12 becomes more positive than its --input, which is connected to the +-input of amplifier IC11. Therefore, the current from the positive voltage +V through resistor R32 will no longer flow through diode D11 but it will instead flow through diode D12 and charge capacitor C9. If the overload condition lasts long enough for C9 to be charged beyond the threshold voltage of Schmitt trigger IC13, then the trigger output will fall to 0 V. As a result, the output of NAND circuit IC14 falls to 0 V, the output of amplifier IC15 rises to +V and flip-flops IC7 and IC8 are reset. The output of AND circuit IC14 drains the charge of capacitor C4 via diode D13 while the output of AND circuit IC10 follows the capacitor voltage. As flip-flop IC7 is reset, the KOHJ signal at the output of AND circuit IC9 falls to 0 V, thus turning off power switch 17.

Once the power switch has been turned off, the output of amplifier IC12 returns to 0 V and the current flowing through resistor R32 is again passed to ground. Also, capacitor C9 is discharged via resistor R33 and diode D11 to ground.

The function of the time constant formed by resistor R33 and capacitor C9 is that it permits the output of AND circuit IC14 to discharge capacitor C4 via diode D13. A shorter time constant formed by resistor R32 and capacitor C9 prevents the turning off of the power switch 17 during a momentary overload condition.

In an overload situation, flip-flop IC8 is set, causing indicator LD4 to be lit.

When the KOHJ signal is rising to the +V voltage, a delay is formed from the rising edge of the signal by resistor R34 and capacitor C10. During this time, transistor Q1 conducts and its collector pulls one end of resistor R32 to the 0V-level. In this way, the overload monitoring function is bypassed during the first instants of the power-on state. This is done because the capacitors in the signal devices must be allowed to be charged to the supply voltage before the monitoring of the average current consumption is activated.

After the initial delay, transistor Q1 is shut off and normal monitoring is started. The emitter and base of the transistor are connected by resistor R35.

After the occurrence of an overload condition, a new attempt to switch on the supply of power is only made after a delay determined by the time constant formed by resistor R19 and capacitor C4.

The current monitoring system incorporates a so-called dynamic current limit. This means that after the power switch 17 has been turned on, the monitoring of the current consumption is started. If a sudden change of sufficient duration occurs in the normal current value, then it is possible that e.g. a pulse transformer has been connected to the supply voltage e.g. at the end of a long signal line, in which case the condition is not interpreted at the power unit end as a direct short circuit. However, the pulse transformer would be destroyed with time due to overheating. A break in the voltage supply would tell the installer that he has made an incorrect connection during operation of the network. However, the current limit is high enough to permit the connection of a normal signal device while the supply voltage is on.

The dynamic current limit is formed by resistors R26, R27 and R31 and capacitors C8 and C7. If the current suddenly increases, a change corresponding to the amplification of the voltage divided between resistors R26 and R27 will occur in the output voltage of amplifier IC11. The resulting fast voltage change at the terminal of capacitor C8 generates a current through resistor R31 into capacitor C7. If the change is sufficiently large, capacitor C7 will be charged beyond the level of the --input of amplifier IC12. As a result, the output of this amplifier rises to the +V voltage. Therefore, the control voltage to the power switch 17 is now removed as described above and the switch stops conducting. If the change is small, the voltage across capacitor C4 will not rise sufficiently and no tripping occurs. Capacitor C7 is now discharged via resistors R29 and R30 to ground until the voltage across it reaches the level determined by the voltage division between resistor R28, connected to the +V voltage, and resistors R29 and R30, connected to ground.

When the KOHJ signal again rises to the +V voltage, indicator LD5 is lit and indicator LD4 extinguished. In an overload situation, the converse takes place.

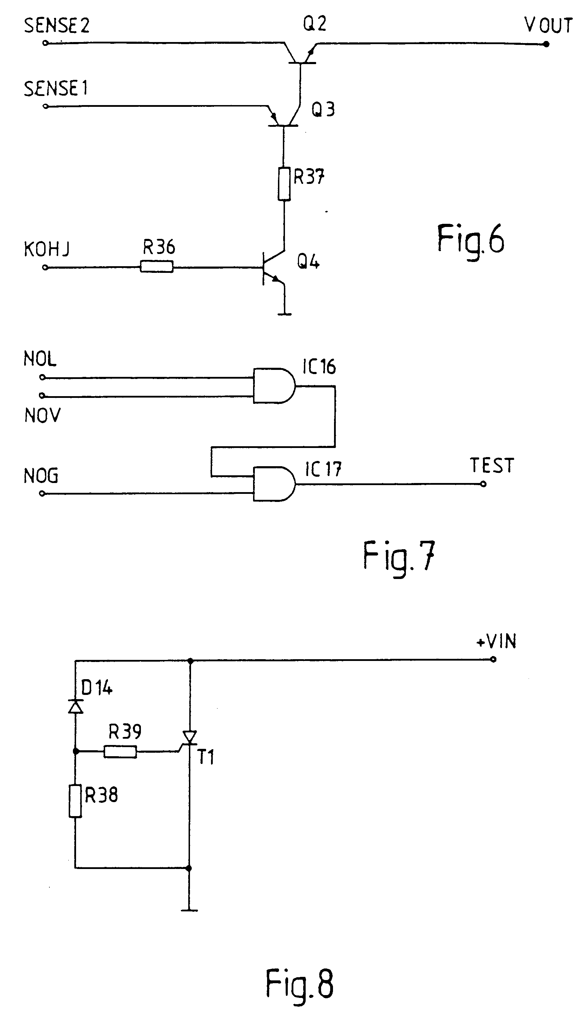

The power switch shown in fig. 6 functions as follows. After the feed voltage has been connected, if no errors are detected by the monitoring system or the bus impedance test, the power switch control logic 16 (fig. 2) causes the power switch control signal KOHJ to rise to the +V voltage. Transistor Q4 now receives a base current via resistor R36. As transistor Q4 starts conducting, a current starts flowing through resistor R37 to the base of transistor Q3, which in turn starts conducting and applies a control voltage from SENSE1 to the base of the power transistor Q2. Thus the voltage +VIN of the SENSE2 signal is passed to point +VOUT.

In an overload situation, the control logic 16 causes the power switch control signal to drop to 0 V, whereupon transistor Q4 is turned off, thus turning off transistor Q3 and, consequently, transistor Q2 as well.

Fig. 7 presents the AND logic monitoring the outputs of the units monitoring the bus state. If the NOL, NOV and NOG signals applied to the inputs of AND circuits IC16 and IC17 are at the +V voltage, the logic enables bus impedance testing after a power break by outputting a TEST signal of +V volts. If during normal operation one of the input signals falls to 0 V, the TEST signal will also fall to 0 V, thus instructing the power switch control logic 16 to turn off the power switch 17.

The overvoltage protector circuit shown in fig. 8 monitors the voltage +VIN obtained from the voltage supply unit (and also the voltage at point +VOUT). If the voltage rises too much, the voltage across resistor R38 will start rising, thereby setting up a current through resistor R39 to the gate of thyristor T1. As the voltage rises, the current flowing to the gate of thyristor T1 increases, and when the current reaches a certain value, the thyristor is fired, thereby short-circuiting point +VIN to ground. The resulting large current will blow out the fuse in the power supply line in the elevator control board, thus preventing the destruction of the bus electronics. If the mains voltage were connected to point +VIN, the firing of the thyristor as described above would result in the blowing-out of the mains voltage fuse as well.

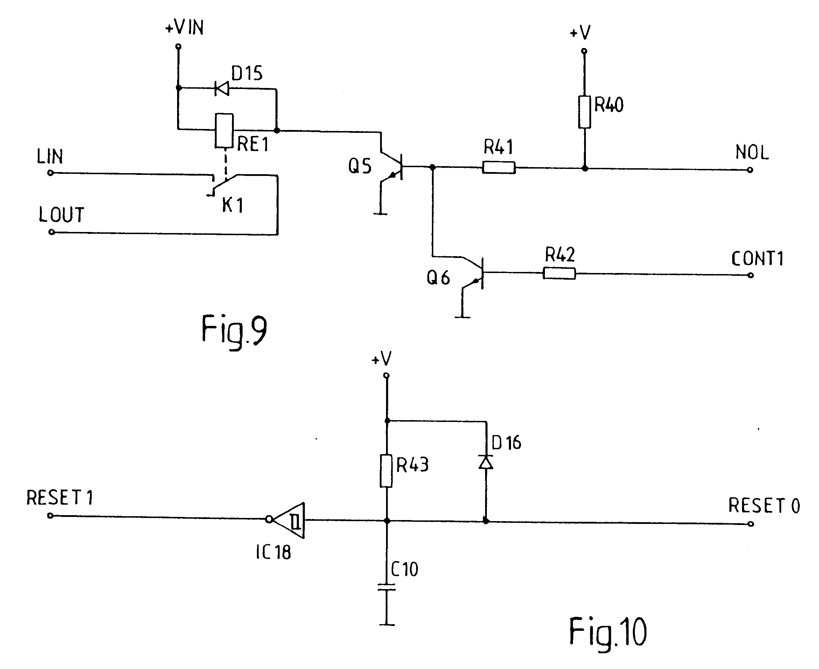

In the mains control unit shown in fig. 9, in a normal situation, the NOL signal is at the +V voltage via resistor R40 while the CONT1 signal is at 0 V. Transistor Q5 thus receives a sufficient base current via resistor R41, because transistor Q6, whose base is connected to the CONT1 signal via resistor R42, is not conducting. Therefore, the voltage at the collector of transistor Q5 is approx. 0 V, and relay RE1, connected in parallel with diode D15, is in the energized state. Consequently, switch K1 connects the voltage LIN to the output LOUT.

When the mains voltage monitoring unit 10 detects the mains voltage in the signal bus, the NOL signal falls to 0 V, thus turning off transistor Q5 and causing relay RE1 to release. Therefore, the contact of switch K1 changes to the other position, thus interrupting the supply of the voltage LIN to the output LOUT.

Similarly, if the supply voltage and signal ground monitoring unit 12 detects the signal ground potential in the signal bus, the CONT1 signal is caused to rise to the +V voltage. Transistor Q6 will now start conducting, thereby preventing transistor Q5 from receiving a base current. Thefore, relay RE1 releases and the supply of the mains voltage LIN to point LOUT is interrupted.

The reset logic in fig. 10 performs the initial resetting of the system after a power break.

Since the system comprises reset states active both in the 0-state and in the 1-state, signal RESET0 is needed for the former and signal RESET1 for the latter.

When the system is connected to the electricity supply, capacitor C10 is charged via resistor R43 to the voltage of +V. At the first instant, when the voltage across capacitor C10 is 0 V, the RESET1 signal is at +V for a time determined by the time constant formed by resistor R43 and capacitor C10. when the voltage reaches the threshold voltage value of the input of Schmitt trigger IC18, the RESET1 signal at the trigger output changes to approx. 0 V and remains in this state.

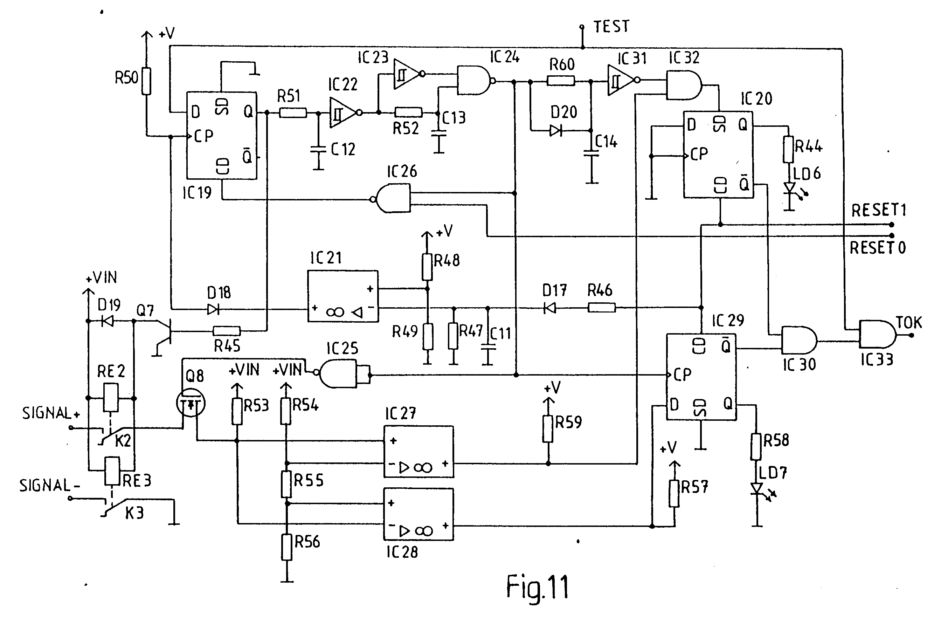

The line impedance testing logic shown in fig. 11 functions as follows. After a power break, the reset logic 13 (fig. 2) performs initial resetting of the system by keeping the RESET0 signal at 0 V and the RESET1 signal at the +V voltage for approx. 1 s. Flip-flops IC19 and IC20 in the testing logic are now reset and the Q outputs of both are at 0 V. Indicator light LD6, connected via resistor R44 to the flip-flop output Q, is unlit. Transistor Q7 is not conducting, because no control current is flowing to its base through resistor R45.

If no incorrect voltages are detected in the line by the mains voltage monitoring unit 10 or the supply voltage and signal ground monitoring unit 12, AND logic unit 14 will cause the TEST signal to rise to the voltage of +V. The TEST signal is connected to input D of flip-flop IC19. While the RESET1 signal is at the +V level, capacitor C11 is charged through resistor R46 and diode D17 to the voltage of +V. When the RESET1 signal returns to the 0 V level, capacitor C11 starts discharging via resistor R47 towards the 0 V level. As soon as the capacitor voltage falls below the level of the voltage at the +-input of comparator IC21, formed from the +V voltage via division by resitors R48 and R49, the comparator output changes from 0 V to the +V level, with the result that diode D18 stops conducting and the clock input CP of flip-flop IC19, which is active on the rising edge, rises to the +V voltage via resistor R50. If the TEST signal is at the +V voltage, output Q of flip-flop IC19 now rises to the +V level. Transistor Q7 thus receives a base current through resistor R45 and starts conducting. Therefore, relays RE2 and RE3 are energized, causing contact K2 to connect the positive signal line (SIGNAL+) to MOSFET Q8 and contact K3 to connect the negative signal line (SIGNAL-) to signal ground. One terminal of each relay RE2 and RE3 is connected to the supply voltage +VIN, and a diode D19 is connected in parallel with the relays.

When output Q of flip-flop IC19 reaches the +V level, capacitor C12 starts charging via resistor R51. As soon as the input of Schmitt trigger IC22 has reached the trigger level, its output falls to 0 V. Therefore, the output-connected to the input of NAND circuit IC24 - of the Schmitt trigger IC23 connected after IC22 rises to the +V voltage. Simultaneously, the capacitor C13 connected to the other input of NAND circuit IC24 starts discharging via resistor R52, connected to Schmitt trigger IC22. Since both inputs of NAND circuit IC24 are at the level of the +V voltage, its output will change to the 0 V level and remain at this level for a time determined by the time constant of resistor R52 and capacitor C13. When the output of NAND circuit IC24 falls to 0 V, the output of NAND gate IC25 following it rises correspondingly to the +V voltage and remains at this level for the same time, thus turning MOSFET Q8 on. The voltage +VIN is now passed via resistor R53 and contact K2 of relay RE2 to the positive line SIGNAL+ of the bus, the load of which consists of the terminal resistors and pulse transformers. Connected to the output of NAND circuit IC24 is also AND gate IC26, the other input of which is fed by the RESET0 signal. The output of IC26 is connected to the CD input of flip-flop IC19.

During the presence of the pulse, comparators IC27 and IC28 follow the signal level and compare it to reference values formed via voltage division by resistors R54 - R56. When the output of NAND gate IC24 rises to the +V level, the data at input D of flip-flop IC29, connected to the +V voltage via resistor R57, is transferred to the output, which is connected to AND circuit IC30. If the line impedance is too low, then the voltage at the --input of comparator IC28 will be lower than the reference voltage at the +-input, causing the output of comparator IC28 to rise to the level of +V. The output of flip-flop IC29 is now set. Indicator LD7 receives a current through resistor R58 and is lit. Simultaneously, the other output of flip-flop IC29 falls to 0 V and the AND logic unit 14 inhibits the control of the power switch handling the supply voltage.

If during the line impedance test the voltage at the --input of comparator IC28 exceeds the voltage at its +-input, the comparator output will remain at 0 V, which means that no current flows through indicator LD7, which thus remains unlit. Similarly, the other output of flip-flop IC29 remains at the +V voltage level.

The upper comparator IC27 checks whether the bus impedance is too high by examining the voltage level of the pulse. If the +-input of comparator IC27 exceeds the reference voltage value at the --input, the comparator output will rise to the +V voltage connected via resistor R59. After the time constant determined by resistor R60, connected in parallel with diode D20, and capacitor C14, the voltage across capacitor C14 at the input of Schmitt trigger IC31 will have fallen to the level of its threshold voltage. The trigger output, connected to AND gate IC32, will now go high, and during and after the rise, if the output of comparator IC27, which is also connected to AND gate IC32, assumes the high state for an instant, then flip-flop IC20 will be set because its SD input momentarily receives the +V voltage. Consequently, a current will flow through resistor R44 and indicator LD6, which is now lit. Simultaneously, the other output of flip-flop IC20, connected to AND gate IC30, falls to 0 V. As a result, the control voltage to the power switch is cut off by means of the TOK signal, which is obtained from the output of AND gate IC33, whose inputs are fed by the TEST signal and the output of AND gate IC30.

If the flip-flops are set during the test, this means that the bus impedance is either too high or too low, and the indicator light corresponding to the fault remains lit. After the fault has been eliminated, the power has to be switched off again for the indicator lights to be extinguished and the control of the power switch 17 to be enabled.

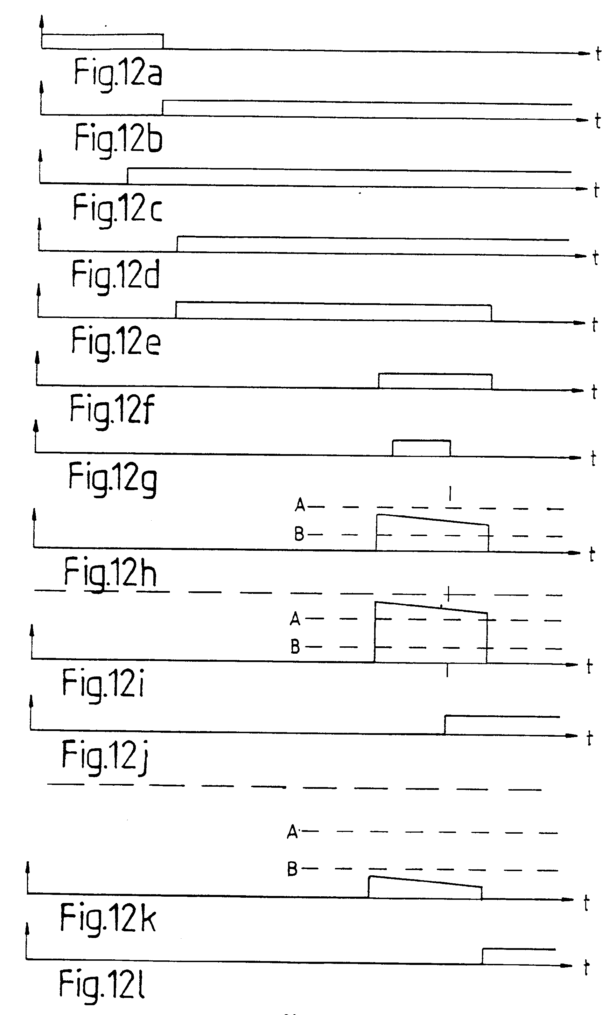

Figs. 12a - 12l present the pulse diagrams for the line impedance testing logic shown in fig. 11. The horizontal axis represents the time t. Fig. 12a represents the RESET1 signal and fig. 12b, the RESET0 signal. Fig. 12c represents the TEST signal. Fig. 12d represents the CP input of flip-flop IC19. Fig. 12e represents the signal controlling relays RE2 and RE3. Fig. 12f represents the test pulse at the output of NAND gate IC25. Fig. 12g represents the output of Schmitt trigger IC31. Fig. 12h represents the test pulse when the correct line impedance prevails. In addition, the broken lines in figs. 12h, 12i and 12k represent the upper and lower reference values. Fig. 12i represents the test pulse and fig. 12j the Q output of flip-flop IC20 when the line impedance is too low. Fig. 12k represents the test pulse and fig. 12l the Q output of flip-flop IC29 when the line impedance is too high.

It is obvious to a person skilled in the art that different embodiments of the invention are not restricted to the example described above, but that they may instead be varied within the scope of the following claims.

## Claims

1. Method for the protection of a data transmission network consisting of a signal bus (4,5) provided with terminal impedances (R1,R2) and of signal devices (6,7) connected to the bus, wherein to protect the network, the voltage in the bus is monitored,
**characterized** in
that the bus is connected to ground and to a supply voltage (+VIN) via impedances (R3,R4),
that the impedance of the network is tested by sending a test pulse into the bus,
that the impedance test of the bus is carried out only after ensuring that no incorrect voltages on the bus are present, and that the supply of electricity from the supply voltage (+VIN) at least to the signal devices is inhibited if either the voltage or the impedance or both exceed an allowed range.

2. Method according to claim 1, **characterized** in that in case the mains voltage (LIN) and/or signal ground (GND) is connected to the bus in a failure situation, then also the supply of the mains voltage to the electric components of an elevator is inhibited.

3. Apparatus for the protection of a data transmission network consisting of a signal bus (4,5) and signal devices (6,7) connected to the bus, wherein one monitoring unit (10,12) for monitoring the voltage in the bus is provided to protect the network,
**characterized** in
that impedances (R3,R4) are provided to connect the bus with the supply voltage (+VIN) and signal ground (GND),
that the monitoring unit is provided as supply voltage and signal ground monitoring units (10,12),
that an impedance testing unit (15) is provided to perform an impedance test of the bus only after the supply voltage and
signal ground monitoring units (10,12) detect that no incorrect voltages are present on the bus, and
that a power switch (17) controlled by a power switch control logic (16) is provided such way that the supply of electricity from the supply voltage (+VIN) at least to the signal devices is inhibited if either the voltage or the impedance or both exceed an allowed range.

4. Apparatus according to claim 3, **characterized** in that the apparatus comprises a mains control unit (11) which inhibits the supply of the mains voltage in a failure situation where the mains voltage (LIN) and/or signal ground (GND) is connected to the bus.

5. Apparatus according to claim 3 or 4, **characterized** in that the resistances (R3,R4) are essentially equal.

6. Apparatus according to claim 3, 4 or 5, **characterized** in that the apparatus comprises a unit (14) which checks the states of the mains voltage, supply voltage and signal ground monitoring units (10,12) and, if the bus voltage is within the allowed limits, instructs the line impedance testing unit (15) to measure the impedance of the bus.

7. Apparatus according to any one of claims 3 - 6, **characterized** in that the apparatus comprises a reset unit (13) for resetting the logic elements (IC1, IC3,IC8,IC20,IC29) after the power has been switched on.

8. Apparatus according to any one of claims 3 - 6, **characterized** in that the apparatus comprises an overvoltage protector unit (18) protecting the signal devices against voltages of an excessive absolute value occurring in the supply voltage (+VIN).

9. Apparatus according to any one of claims 3 - 8, **characterized** in that the apparatus comprises at least one current sensing resistor (R5), the voltage across which - said voltage being proportional to the current flowing through the resistor - serves as a basis on which the power switch control unit (16) controls the power switch (17) in such a way that when said voltage is within the allowed limits, the power switch (17) conducts continuously, and when the voltage exceeds the permitted value at least during a certain time, the power switch (17) stops conducting.

10. Apparatus according to claim 9, **characterized** in that the power switch control unit comprises components (R26-R31,C8,C7) for forming a dynamic current limit, said components serving to turn off the power switch (17) when the current increases faster than the set limit.

11. Apparatus according to any one of claims 3 - 10, **characterized** in that the apparatus is provided with indicator lights (LD1-LD7) for indicating the presence of error situations.

12. Apparatus according to any one of claims 3 - 11, **characterized** in that at least the mains voltage and supply voltage monitoring units (10,12) incorporate time delay circuits (R6,C1,R13,C2), through which, when either the voltage (+VIN) supplying the signal devices or the mains voltage (LIN) is connected to the bus in a failure situation, a bus voltage signal is passed to a comparator (IC2,IC4) which compares the voltage to a reference value.

## Patentansprüche

1. Verfahren für den Schutz eines Datenübertragungsnetzes, das aus einem mit Abschlußwiderständen (R1, R2) versehenen Signalbus (4,5) und aus Signaleinrichtungen (6,7) besteht, die mit dem Bus verbunden sind, wobei zum Schutz des Netzes die Spannung in dem Bus überwacht wird,
dadurch **gekennzeichnet**,
daß der Bus über Widerstände (R3, R4) mit Masse und mit einer Versorgungsspannung (+VIN) verbunden ist,
daß die Impedanz des Netzes durch Absenden eines Test-Impulses in den Bus überprüft wird,
daß der Impedanztest des Bus nur durchgeführt wird, nachdem sichergestellt worden ist, daß keine Fehlspannungen auf dem Bus präsent sind, und
daß die Stromzufuhr von der Versorgungsspannung (+VIN) zumindest zu den Signaleinrichtungen verhindert wird, wenn entweder die Spannung oder die Impedanz oder beide einen zulässigen Bereich überschreiten.

2. Verfahren nach Anspruch 1,
dadurch **gekennzeichnet**,
daß falls in einer Fehlersituation die Netzspannung (LIN) und/oder die Signalmasse (GND) mit dem Bus verbunden ist, ebenfalls die Netzspannungszufuhr zu den elektrischen Komponenten eines Aufzugs verhindert wird.

3. Vorrichtung zum Schutz eines Datenübertragungsnetzes, bestehend aus einem Signalbus (4,5) und mit dem Bus verbundenen Signaleinrichtungen (6,7), wobei eine Überwachungseinheit (10,12) zur Überwachung der Spannung in dem Bus vorgesehen ist, um das Netz zu schützen,
dadurch **gekennzeichnet**,
daß Widerstände (R3, R4) vorgesehen sind, um den Bus mit der Versorgungsspannung (+VIN) und der Signalmasse (GND) zu verbinden,
daß die Überwachungseinheit als Überwachungseinheiten (10,12) für die Versorgungsspannung und das Signalmassepotential vorgesehen sind,
daß eine Impedanzprüfeinrichtung (15) vorgesehen ist, um einen Impedanztest des Bus nur dann durchzuführen, nachdem die Überwachungseinheiten (10,12) für die Versorgungsspannung und das Signalmassepotential festgestellt haben, daß keine Fehlspannungen auf dem Bus präsent sind, und
daß ein von einer Leistungsschalter-Steuerungslogik (16) angesteuerter Leistungsschalter (17) in der Weise vorgesehen ist, daß die Elektrizitätszufuhr von der Versorgungsspannung (+VIN) zumindest zu den Signaleinrichtungen verhindert wird, wenn entweder die Spannung oder die Impedanz oder beide einen zulässigen Bereich überschreiten.

4. Vorrichtung nach Anspruch 3,
dadurch **gekennzeichnet**,
daß die Vorrichtung eine Netzsteuereinheit (11) enthält, welche die Zufuhr der Netzspannung in einer Fehlersituation verhindert, in der die Netzspannung (LIN) und/oder die Signalmasse (GND) mit dem Bus verbunden sind.

5. Vorrichtung nach Anspruch 3 oder 4,
dadurch **gekennzeichnet**,
daß die Widerstände (R3,R4) im wesentlichen gleich sind.

6. Vorrichtung nach Anspruch 3, 4 oder 5,
dadurch **gekennzeichnet**,
daß die Vorrichtung eine Einheit (14) umfaßt, die den Zustand der Netzspannung und der Überwachungseinheiten (10,12) für die Versorgungsspannung und das Signalmassepotential überprüft, und, wenn die Busspannung innerhalb der zulässigen Grenzen liegt, die Kabelimpedanz-Prüfeinrichtung (15) instruiert, die Impedanz des Bus zu messen.

7. Vorrichtung nach einem der Ansprüche 3 bis 6,
dadurch **gekennzeichnet**,
daß die Vorrichtung eine Reset-Einheit (13) umfaßt, um die logischen Elemente (IC1, IC3, IC8, IC20, IC29) zurückzusetzen, nachdem der Strom eingeschaltet worden ist.

8. Vorrichtung nach einem der Ansprüche 3 bis 6,
dadurch **gekennzeichnet**,
daß die Vorrichtung einen Überspannungsschutz (18) enthält, der die Signaleinrichtungen gegen Spannungen mit einem übermäßigen Absolutwert schützt, die in der Versorgungsspannung (+VIN) auftreten.

9. Vorrichtung nach einem der Ansprüche 3 bis 8,
dadurch **gekennzeichnet**,
daß die Vorrichtung zumindest einen Widerstand (R5) zur Strommessung aufweist, dessen Abgriffspannung, welche Spannung proportional zu dem Stromfluß durch den Widerstand ist, als Basis dient, auf welcher die Leistungsschalter-Steuereinheit (16) den Leistungsschalter (17) in der Weise ansteuert, daß, wenn diese Spannung innerhalb der zulässigen Grenzen liegt, der Leistungsschalter (17) kontinuierlich leitet, und wenn die Spannung den zulässigen Wert zumindest eine bestimmte Zeit überschreitet, der Leistungsschalter (17) die Leitung unterbricht.

10. Vorrichtung gemäß Anspruch 9,
dadurch **gekennzeichnet**,
daß die Leistungsschalter-Steuereinheit Komponenten (R26 bis R31, C8, C7) umfaßt, um einen dynamischen Stromgrenzwert zu bilden, welche Komponenten dazu dienen, den Leistungsschalter (17) auszuschalten, wenn der Strom stärker ansteigt als der gesetzte Grenzwert.

11. Vorrichtung nach einem der Ansprüche 3 bis 10,
dadurch **gekennzeichnet**,
daß die Vorrichtung mit Anzeigelichtern (LD1 bis LD7) versehen ist, um das Vorliegen von Fehlersituationen anzuzeigen.

12. Vorrichtung nach einem der Ansprüche 3 bis 11,
dadurch **gekennzeichnet**,
daß zumindest die Überwachungseinheiten (10,12) für die Netzspannung und Versorgungsspannung Verzögerungsschaltungen (R6, C1, R13, C2) aufweisen, durch welche ein Busspannungssignal zu einem Komparator (IC2, IC4) geleitet wird, der die Spannung mit einem Referenzwert vergleicht, wenn entweder die den Signaleinrichtungen zugeführte Versorgungsspannung (+VIN) oder die Netzspannung (LIN) in einer Fehlersituation mit dem Bus verbunden wird.

## Revendications

1. Procédé pour la protection d'un réseau de transmission de données constitué d'un bus de signal (4,5), pourvu d'impédances terminales (R1,R2), et de dispositifs de signal (6,7) connectés au bus, dans lequel, pour protéger le réseau, on surveille la tension dans le bus,
caractérisé en ce que
le bus est connecté à la terre et à une tension d'alimentation (+VIN) par l'intermédiaire d'impédances (R3,R4),
l'impédance du réseau est testée par envoi d'une impulsion de test dans le bus,
le test d'impédance du bus est effectué seulement après vérification que des tensions incorrectes ne sont pas présentes sur le bus, et
la fourniture d'électricité à partir de la tension d'alimentation (+VIN) au moins aux dispositifs de signal est empêchée si la tension ou l'impédance ou les deux dépassent une plage autorisée.

2. Procédé suivant la revendication 1,
caractérisé en ce que, dans le cas où la tension du réseau de distribution (LIN) et/ou la terre de signal (GND) sont connectées au bus dans une situation de défaut, alors également la fourniture de la tension du réseau de distribution aux composants électriques d'un ascenseur est empêchée.

3. Dispositif pour la protection d'un réseau de transmission de données constitué d'un bus de signal (4,5) et de dispositifs de signal (6,7) connectés au bus, dans lequel une unité de surveillance (10,12) pour surveiller la tension dans le bus est prévue afin de protéger le réseau de transmission de données,
caractérisé en ce que :
des impédances (R3,R4) sont prévues pour connecter le bus à la tension d'alimentation (+VIN) et à la terre de signal (GND),
l'unité de surveillance est prévue sous la forme d'unités de surveillance de la tension d'alimentation et de la terre de signal (10,12),
une unité de contrôle d'impédance (15) est prévue pour effectuer un test d'impédance du bus seulement après que les unités de surveillance de tension d'alimentation et de terre de signal (10,12) aient détecté qu'il n'y a pas de tensions incorrectes sur le bus, et,
un interrupteur de puissance (17) commandé par une logique de commande d'interrupteur de puissance (16) est prévu d'une manière telle que la fourniture d'électricité à partir de la tension d'alimentation (+VIN) au moins aux dispositifs de signal est empêchée si la tension ou l'impédance ou les deux dépassent une plage autorisée.

4. Dispositif suivant la revendication 3, caractérisé en ce que le dispositif comprend une unité de commande de réseau de distribution (11) qui empêche le branchement de la tension du réseau de distribution dans une situation de défaut dans laquelle la tension du réseau de distribution (LIN),et/ou la terre de signal (GND),est connectée au bus.

5. Dispositif suivant la revendication 3 ou 4, caractérisé en ce que les résistances (R3,R4) sont sensiblement égales.

6. Dispositif suivant la revendication 3,4 ou 5, caractérisé en ce que le dispositif comprend une unité (14) qui vérifie les états des unités de surveillance de la tension du réseau de distribution, de la tension d'alimentation et de la terre de signal (10,12) et, si la tension du bus est à l'intérieur des limites autorisées, ladite unité (14) envoie une instruction à l'unité de contrôle d'impédance de ligne (15) pour mesurer l'impédance du bus.

7. Dispositif suivant une quelconque des revendications 3 à 6, caractérisé en ce que le dispositif comprend une unité de restauration (13) pour restaurer les éléments logiques (IC1,IC3,IC8,IC20,IC29) après branchement de la puissance.

8. Dispositif suivant une quelconque des revendications 3 à 6, caractérisé en ce que le dispositif comprend une unité de protection contre les surtensions (18) qui protège les dispositifs de signal contre les tensions d'une valeur absolue excessive apparaissant dans la tension d'alimentation (+VIN).

9. Dispositif suivant une quelconque des revendications 3 à 8, caractérisé en ce que le dispositif comprend au moins une résistance de détection de courant (R5) dont la tension aux bornes, qui est proportionnelle au courant circulant dans la résistance, sert de base sur laquelle l'unité de commande d'interrupteur de puissance (16) commande l'interrupteur de puissance (17) d'une manière telle que, lorsque ladite tension est à l'intérieur des limites autorisées, l'interrupteur de puissance (17) conduit continuellement et, lorsque la tension dépasse la valeur permise, au moins pendant un certain temps, l'interrupteur de puissance (17) cesse de conduire le courant.

10. Dispositif suivant la revendication 9, caractérisé en ce que l'unité de commande d'interrupteur de puissance comprend des composants (R26-R31,C8,C7) pour définir une limite de courant dynamique, lesdits composants servant à ouvrir l'interrupteur de puissance (17) lorsque le courant augmente plus vite que la limite fixée.

11. Dispositif suivant une quelconque des revendications 3 à 10, caractérisé en ce que le dispositif comprend des lampes indicatrices (LD1-LD7) pour indiquer la présence de situations de défaut.

12. Dispositif suivant une quelconque des revendications 3 à 11, caractérisé en ce qu'au moins les unités de surveillance de tension de réseau de distribution et de tension d'alimentation (10,12) comprennent des circuits de temporisation (R6,C1,R13,C2) par l'intermédiaire desquels , lorsque la tension (+VIN) d'alimentation des dispositifs de signal, ou la tension du réseau de distribution (LIN), est connectée au bus dans une situation de défaut, un signal de tension de bus est appliqué à un comparateur (IC2,IC4) qui compare la tension à une valeur de référence.
